(19) Europäisches Patentamt / European Patent Office / Office européen des brevets

(11) **EP 2 183 577 B1**

(12) **EUROPÄISCHE PATENTSCHRIFT**

(45) Veröffentlichungstag und Bekanntmachung des Hinweises auf die Patenterteilung:
**29.07.2015 Patentblatt 2015/31**

(51) Int Cl.:
*G01N 22/00* *(2006.01)*    *G01N 22/04* *(2006.01)*

(21) Anmeldenummer: **08785055.8**

(22) Anmeldetag: **25.07.2008**

(86) Internationale Anmeldenummer:
**PCT/EP2008/006102**

(87) Internationale Veröffentlichungsnummer:
**WO 2009/030314 (12.03.2009 Gazette 2009/11)**

(54) **VERFAHREN UND VORRICHTUNG ZUR MESSUNG EINES DICHTEUNABHÄNGIGEN FEUCHTEWERTES UND EINES DICHTEWERTES VON DIELEKTRISCHEN STOFFEN AUS DEN FREQUENZVERSCHIEBUNGEN ZWEIER MIKROWELLENRESONATOREN ODER ZWEIER MODEN EINES MIKROWELLENRESONATORS**

METHOD AND DEVICE FOR MEASURING A DENSITY-INDEPENDENT MOISTURE VALUE AND A DENSITY VALUE OF DIELECTRIC MATERIALS FROM THE FREQUENCY SHIFTS OF TWO MICROWAVE RESONATORS OR TWO MODES OF A MICROWAVE RESONATOR

PROCÉDÉ ET DISPOSITIF DE MESURE D'UNE VALEUR D'HUMIDITÉ INDÉPENDANTE DE LA DENSITÉ ET D'UNE VALEUR DE DENSITÉ DE MATÉRIAUX DIÉLECTRIQUES À PARTIR DES DÉCALAGES DE FRÉQUENCE ENTRE DEUX RÉSONATEURS HYPERFRÉQUENCE OU DEUX MODES D'UN RÉSONATEUR HYPERFRÉQUENCE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **28.08.2007 DE 102007041429**

(43) Veröffentlichungstag der Anmeldung:
**12.05.2010 Patentblatt 2010/19**

(73) Patentinhaber: **TEWS ELEKTRONIK Dipl.-Ing. Manfred Tews**
**22459 Hamburg (DE)**

(72) Erfinder:
 • **HERRMANN, Rainer**
  **20253 Hamburg (DE)**
 • **SCHLEMM, Udo**
  **20259 Hamburg (DE)**
 • **RICHTER, Hendrik**
  **20255 Hamburg (DE)**

(74) Vertreter: **Hauck Patentanwaltspartnerschaft mbB**
**Postfach 11 31 53**
**20431 Hamburg (DE)**

(56) Entgegenhaltungen:
**EP-A- 0 287 725    EP-A- 1 703 275**
**US-A- 4 257 001    US-A- 5 397 993**

 • **ALEXANDER S. SOVLUKOV: "Microwave and RF Resonator-Based Aquametry" KAUS KUPFER (ED.): ELECTROMAGNETIC AQUAMETRY - ELECTROMAGNETIC WAVE INTERACTION WITH WATER AND MOIST SUBSTANCES, 3. Dezember 2004 (2004-12-03), Seiten 169-191, XP002498012 Springer, Berlin ISBN: 3-540-22222-7**
 • **FISCHER M ET AL: "FAST MOISTURE PROFILE MAPPING OF A WET PAPER WEB WITH A DUAL-MODE RESONATOR ARRAY" PROCEEDINGS OF THE EUROPEAN MICROWAVE CONFERENCE. FOLKETS HUS, SWEDEN, SEPT. 12 - 16, 1988; [PROCEEDINGS OF THE EUROPEAN MICROWAVE CONFERENCE], TUNBRIDGE WELLS, MICROWAVE EXHIBITIONS, GB, Bd. CONF. 18, Nr. 1988, 12. September 1988 (1988-09-12), Seiten 607-612, XP000042125**

EP 2 183 577 B1

- HOPPE W ET AL: "Density-independent moisture metering in fibrous materials using a double-cutoff Gunn oscillator" IEEE TRANSACTIONS ON MICROWAVE THEORY AND TECHNIQUES, IEEE SERVICE CENTER, PISCATAWAY, NJ, US, Bd. MTT-28, Nr. 12, 1. Dezember 1980 (1980-12-01), Seiten 1449-1452, XP002461926 ISSN: 0018-9480
- KUPFER K ED - BLATES H ET AL: "Microwave Moisture Measurement Systems and Their Applications", 1 January 2000 (2000-01-01), SENSORS UPDATE - SPECIAL TOPIC: RF & MICROWAVE SENSING OF MOIST MATERIALS, WILEY-VCH, WEINHEIM, GERMANY, PAGE(S) 343 - 376, XP002639590, ISBN: 978-3-527-29821-1
- KLAUS KUPFER ED - KUPFER K (EDITOR): "Electromagnetic Aquametry - Electromagnetic Wave Interaction with Water and Moist Substances, Methods of Density-Independent Moisture Measurement", 1 January 2005 (2005-01-01), ELECTROMAGNETIC AQUAMETRY - ELECTROMAGNETIC WAVE INTERACTION WITH WATER AND MOIST SUBSTANCES, SPRINGER, BERLIN, PAGE(S) 135 - 168, XP002639588, ISBN: 978-3-540-22222-4
- MYSORE R LAKSHMINARAYANA ET AL: "Simple Microwave Technique for Independent Measurement of Sample Size and Dielectric Constant with Results for a Gunn .Oscillator System", IEEE TRANSACTIONS ON MICROWAVE THEORY AND TECHNIQUES, IEEE SERVICE CENTER, PISCATAWAY, NJ, US, vol. MTT-27, no. 7, 1 July 1979 (1979-07-01), pages 661-665, XP001362280, ISSN: 0018-9480

**Beschreibung**

Die vorliegende Erfindung betrifft ein Verfahren zur Messung eines Feuchtewerts von dielektrischen Stoffen unter Verwendung von mindestens einem Mikrowellenresonator. Die vorliegende Erfindung ist insbesondere auch für Granulations-, Agglomerations-, Instantisierungs-, Coating- und Trocknungsprozesse in einer Wirbelschicht oder einer bewegten Schüttung geeignet.

Allgemein ist die Verwendung der Mikrowellentechnik zur Masse- und/oder Feuchtebestimmung bekannt. Aus DE 40 04 119 C2 ist es bekannt, wie man den Einfluss von Dichte-/Massevariationen auf ein Feuchtesignal bei einer Messung mit einer Mikrowellenresonanz verhindert. Hierzu wird die Veränderung in der Dämpfung des Signals, wie sie beispielsweise durch die Veränderung der Resonanzbreite oder der Resonanzamplitude angezeigt wird, auf die Verschiebung der Resonanzfrequenz normiert. Es wird somit das Dämpfungssignal auf einen Dichtezustand normiert, der stets eine zur Dichte proportionale Resonanzfrequenzverschiebung erzeugt. Dieser zweiparametrige Ansatz, bei dem neben einer Verschiebung der Resonanzfrequenz auch die auftretende Dämpfung gemessen wird, erlaubt eine präzise Messung der Feuchte unabhängig von der Dichte. Insbesondere beim Einsatz in Wirbelschichttrocknern erlaubt das zweiparametrige Messverfahren eine präzise Trennung der unterschiedlichen Einflüsse auf die Messergebnisse. Insbesondere können die Einflüsse des unterschiedlichen Granulierungsgrades deutlich von den Einflüssen der Granulierung getrennt werden.

EP 0 970 369 beschreibt eine Feuchtemessung im Hochfrequenzbereich an einer Wirbelschicht oder einer bewegten Schüttung mit der Dämpfung einer Resonanzmode zur Bestimmung der Feuchte. Eine direkte Messung der Korngrößenverteilung erfolgt dabei nicht, vielmehr wird angenommen, dass die Produktgesamtfeuchte ein direktes Maß für die Korngrößenverteilung sei und somit bei bekannter Feuchte auch die Korngrößenverteilung bekannt sei. Da die gemessene Dämpfung des Mikrowellensignals immer einerseits von der Materialmenge im Messfeld und andererseits von deren Feuchtegehalt abhängt, ist aufgrund der Messung nur der Dämpfung der Einfluss einer Masse- bzw. Dichtevariation des Messguts auf das Feuchtesignal nicht kompensierbar. Das Verfahren kann daher nur für Wirbelschichtprozesse und bei bewegten Schüttungen eingesetzt werden, bei denen eine solche Dichtekompensation nicht erforderlich ist.

Aus DE 196 45 923 A1 ist ein optischer Messkopf zur Online-Untersuchung der Feuchtigkeit und/oder der Partikelgröße agglomerierter Teilchen in Granulatoren oder Trocknern bekannt.

Aus DE 37 39 538 A1 ist eine Vorrichtung zur kontinuierlichen Feuchtemessung in Wirbelschichten bekannt. Hierbei erfolgt eine kapazitive Messung in zwei konzentrischen Zylindern, deren Zylinderachsen in etwa parallel zum Feststoffstrom angeordnet sind. Über eine Änderung der Kapazität wird der Feuchtegehalt bestimmt. Da beim kapazitiven Messverfahren die Messsignale vom Mineralstoffgehalt des Messgutes abhängen, ist eine Trennung von Feuchte und Dichte (bzw. Masse / Korngröße) bei diesem Verfahren nicht möglich.

Aus DE 32 41 544 A1 ist ein Verfahren zum Überwachen und/oder Steuern bei Trocknungs-, Granulier-, Instantisier-, Dragier- und Filmcoating-Prozessen bekannt. Hierbei wird die Feuchte der Abluft sowie die Feuchte der Zuluft gemessen und die sich daraus ergebende Feuchtedifferenz zur Steuerung des Arbeitsprozesses eingesetzt.

Aus Lakshminarayana et al.: "Simple Microwave Technique for Independent Measurement of Sample Size and Dielectric Constant with Results for a Gunn Oscillator System" aus IEEE Transactions on Microwave Theory and Technikques, Vol. MTT-27, Juli 1979, Nr. 7, Seiten 661 bis 665, ist für einen Spezialfall die Bestimmung des Realteils der Dielektrizitätskonstante beschrieben. Hierbei wird in einem Rechteckresonator oder in einem zylindrischen Resonator ein fadenförmiges Produkt gemessen und angenommen, dass durch das Produkt kleine Störungen in dem Resonator auftreten, die mit Hilfe der Näherungen der Störungstheorie berechnet werden können. Gleichung (6) für den Rechteckresonator und Gleichung (7) für den Zylinderresonator führen bei der Verwendung der TE- und TH-Moden zu einer Bestimmung des Realteils der Dielektrizitätskonstante. Der Realteil der Dielektrizitätskonstante ist von der Dichte des Fadens und von seinem Feuchtewert abhängig. Der störungstheoretische Ansatz findet sich auch in US 4,257,001.

Ebbe Nyfors und Pertti Vainikainen: "Industrial Microwave Sensors", Seiten 69 bis 108 stellt auf eine orthogonale Messtechnik ab, die bei dünnen und flächenförmigen Materialien anwendbar ist. Für kleine Störungen kann aus dem Quotienten der Resonanzfrequenzverstimmung zweier orthogonaler Moden der Realteil der Dielektrizitätskonstante bestimmt werden (vgl. erste Formel auf Seite 85). Der Realteil der Dielektrizitätskonstanten ist sowohl von der Dichte als auch von der Feuchte des Materials abhängig und erlaubt keine Trennung von Dichte und Feuchtemessung.

Aus Kupfer: "Microwave Moisture Measurement Systems and Their Applications" beschreibt ein Messverfahren auf den Seiten 367 bis 370, bei dem mit einer Mode das Produkt gemessen wird. Die zweite, als Referenzmode dienende Mode hat keine Wechselwirkung mit dem Produkt, da das Produkt durch einen Schwingungsknoten geführt wird. Der Referenzmodus dient allein zur thermischen Kompensation und zur Erfassung von Sensorverschmutzung. Übrig bleibt ein Ein-Parameter-Verfahren, das nicht in der Lage ist, eine getrennte Messung von Feuchte und Dichte im Produkt durchzuführen. Hierfür wird die Dämpfung eines Gammastrahlers zusätzlich gemessen.

Aus Kupfer: "Method of Density-Independent Moisture Measurement" ist aus Unterkapitel 7.4.8 bekannt, bei zwei unterschiedlichen Frequenzen der Freiraum-Wellenausbreitung die Phasenverschiebung durch das Produkt zu vermessen und aus dem Quotienten der beiden Phasenverschiebungen die Variation der Massen des Produktes im Messfeld kompensieren zu können. Grundsätzlich ist das Freiraumverhalten von Mikrowellen von denen stehender Wellen verschieden, vgl. hierzu DE 10 2007 057 092 B4.

Der Erfindung liegt die Aufgabe zugrunde, ein Verfahren bereitzustellen, das mit einfachen Mitteln sehr genaue Ergebnisse liefert und insbesondere bei einem Einsatz für bewegte Schüttungen oder in Wirbelschichten Masse- bzw. Dichtevariationen des Messguts kompensieren kann.

Die vorstehende Aufgabe wird durch ein Verfahren mit den Merkmalen aus Anspruch 1 gelöst. Bevorzugte Ausgestaltungen bilden die Gegenstände der Unteransprüche.

Das erfindungsgemäße Verfahren dient zur Messung eines Feuchtewerts von dielektrischen Stoffen unter Verwendung von mindestens einem Mikrowellenresonator. Bei dem Verfahren wird für mindestens zwei Resonanzmoden mit voneinander verschiedenen Resonanzfrequenzen jeweils eine Verschiebung der Resonanzfrequenz ausgewertet und aus den gemessenen Verschiebungen der Resonanzfrequenzen ein dichteunabhängiger Feuchtewert berechnet. Der besondere Vorteil dieses Verfahrens liegt darin, dass bei der Bestimmung des Feuchtewerts nicht länger auf einen Dämpfungswert als Maß für die Feuchte zurückgegriffen werden muss. Vielmehr wird aus mindestens zwei bei unterschiedlichen Resonanzfrequenzen auftretenden Verschiebungen der Resonanzfrequenzen mit großer Zuverlässigkeit ein dichteunabhängiger Feuchtewert berechnet. Die Verschiebung der Resonanzfrequenz ergibt sich aus der Differenz der Resonanzfrequenz, die am leeren Resonator auftritt, und der Resonanzfrequenz, die an dem befüllten Resonator auftritt. Bei dem erfindungsgemäßen Verfahren wird der dichteunabhängige Feuchtewert beispielsweise über eine Feuchtekalibrationskurve bestimmt, die den Feuchtewert in Abhängigkeit von mindestens zwei Resonanzfrequenzenverschiebungen angibt.

Erfindungsgemäß werden mehr als zwei Resonanzfrequenzverschiebungen gemessen. Die Messwerte für die Resonanzfrequenzverschiebung werden an eine Dispersionskurve A (f) angepasst. Die Dispersionskurve beschreibt abhängig von der Frequenz den Übergang von einer Resonanzfrequenzverschiebung bei einer niedrigen Frequenz zu einer Resonanzfrequenzverschiebung bei einer hohen Frequenz. Der Ansatz für die Dispersionskurve lautet:

$$A(f) = A_1 + \frac{A_2}{1 + (2\pi f \tau)^2}$$

wobei $A_1$, $A_2$ und $\tau$ reellwertige Konstanten sind, die aufgrund der Messwerte angepasst werden. Die auf diese Art und Weise ermittelten Konstanten $A_1$ und $A_2$ der Dispersionskurve werden als Resonanzfrequenzverschiebung bei besonders kleiner Frequenz und als Resonanzfrequenzverschiebung bei großer Frequenz nachfolgend ausgewertet, gerade so, als wenn es gemessene Resonanzfrequenzverschiebungen wären.

Es ist Lehrbüchern wie dem schon genannten "Industrial Microwave Sensors" zu entnehmen (Gleichung 2.31 b auf S.55), dass sich die Dispersionskurve, d.h. die Frequenzabhängigkeit des Realteils $\varepsilon'_r$ der relativen Dielektrizitätskonstanten $\varepsilon_r$, in der Nähe einer Relaxation oft durch die Debye-Relation

$$\varepsilon'_r = \varepsilon'_{r\infty} + \frac{\varepsilon'_{rs} - \varepsilon'_{r\infty}}{1 + (2\pi f \tau)^2}$$

beschreiben lässt, wobei $\varepsilon'_{r\infty}$ die Permittivität bei sehr hohen Frequenzen darstellt, bei denen sich keine Orientierungspolarisation mehr ausbilden kann, $\varepsilon'_{rs}$ die statische Permittivität darstellt und $\tau$ die Relaxationszeit darstellt. Besagtes Lehrbuch offenbart weiter, dass im dem Fall, dass der Realteil $\varepsilon'_r$ der relativen Dielektrizitätskonstanten wesentlich grösser ist als ihr Imaginärteil $\varepsilon''_r$, für die Resonanzfrequenz $f_{r0}$ eines leeren Hohlraumresonators und die Resonanzfrequenz $f_r$ des gefüllten Hohlraumresonators näherungsweise gilt: $\varepsilon'_r \approx (f_{r0}/f_r)^2$ (Gleichung 3.15 auf S.134). Besagtes Lehrbuch offenbart auf S.90 auch die Näherung $f_{r0}/f_r = f_{r0}/(f_{r0}-\Delta f_r) \approx 1 + (\Delta f_r/f_{r0})$.

Bei dem erfindungsgemäßen Verfahren besitzen die Resonanzfrequenzen bevorzugt einen Mindestabstand. Dieser Mindestabstand beträgt zweckmäßigerweise 0,5 GHz oder mehr.

Bvorzugt kann ein Mindestabstand von 3,0 GHz vorgesehen sein. Die verwendeten Resonanzfrequenzen liegen bevorzugt in einem Bereich von 0,1 GHz bis 40,0 GHz.

In dem erfindungsgemäßen Verfahren berechnet sich der dichteunabhängige Feuchtewert F abhängig von einem Quotienten aus zwei Verschiebungen der Resonanzfrequenz. Der Quotient zweier Resonanzfrequenzverschiebungen ist abhängig von der Produktfeuchte, jedoch unabhängig von der Produktmasse.

Für einen dichteunabhängigen Feuchtwert wird bevorzugt auf eine Hilfsgröße $\phi$ zurückgegriffen. Ein allgemeiner

Ansatz zur Formulierung dieser Hilfsgröße lautet:

$$\varphi = \frac{c_1^{(1)} A_1}{c_2^{(2)} A_2} + c_0$$

wobei $c_1^{(1)}$, $c_2^{(2)}$ und $c_0$ reelle Zahlen sind, die in einem Kalibrierungsvorgang in üblicher Weise angepasst werden.

Bevorzugt werden die Resonanzfrequenzverschiebungen für weit auseinander liegende Resonanzfrequenzen gemessen. Hierbei hat es sich herausgestellt, dass besonders bevorzugt eine untere Resonanzfrequenzverschiebung bei einer Frequenz unterhalb von zwei GHz, besonders bevorzugt unterhalb von einem GHz, für die Auswertung und insbesondere zur Berechnung der Hilfsgröße gut geeignet ist. Auch wird bevorzugt auf eine obere Resonanzfrequenzverschiebung oberhalb von 7 GHz besonders bevorzugt oberhalb von 10 GHz abgestellt. Wird die Hilfsgröße $\varphi$ als Quotient aus oberer und unterer Resonanzfrequenzverschiebung ermittelt, so lassen sich Feuchtemesswerte gewinnen, die nicht nur dichte- und/oder masseunabhängig sind, sondern auch weitgehend von der Stärke der Bindung des Wassers im Produkt die Messergebnisse unabhängig sind.

Um bei der Messung von mehreren Resonanzfrequenzverschiebungen diese zur Bestimmung der Dispersionskurve einsetzen zu können, müssen diese an einem Probekörper normiert werden. Durch diese Normierung-Prozedur wird sichergestellt, dass die besondere Feldverteilung jedes einzelnen Modes keinen Einfluss auf die Messung hat. Hierzu wird zu jeder gemessenen Resonanzfrequenzverschiebung eine Normierungskonstante K definiert, sodass an dem besonderen Referenzkörper alle Resonanzfrequenzverschiebungen den gleichen Wert besitzen. Dieser besondere Referenzkörper hat die Eigenschaft, dass er keinerlei Dispersionseffekte im betrachteten Frequenzbereich aufweist, also für jede Messfrequenz den identischen Wert liefert. Er kann z.B. aus Teflon oder anderen Kunststoffmaterialien bestehen. Für den Referenzkörper gilt:

$$A(f1) = K_2 \cdot A(f2) = K_3 \cdot A(f3) = \ldots\ldots\ldots,$$

wobei $A_i(fi)$ die Resonanzfrequenzverschiebung des i.ten Resonanz-Modes mit der Resonanzfrequenz fi bezeichnet und $K_2$, $K_3$ etc. die reellwertigen Normierungskonstanten sind. Bei der Anpassung der Dispersionskurve wird dann mit den normierten Resonanzfrequenzverschiebungen $K_i \cdot A(fi)$ gerechnet.

Ein besonders bevorzugtes Merkmal, insbesondere bei dem Einsatz in Wirbelschichtprozessen, besteht darin, die Temperatur des zu messenden dielektrischen Stoffes bei der Bestimmung eines dichteunabhängigen Feuchtewerts F zu berücksichtigen.

Untersuchungen haben ergeben, dass sehr gute Ergebnisse bei der Bestimmung der Temperaturabhängigkeit einer dichteunabhängigen Feuchte F mit dem Ansatz erzielt werden können:

$$F(\varphi, T) = D_1(T) \, f(\varphi) + D_2(T),$$

wobei $D_1(T)$ und $D_2(T)$ reelle Funktionen sind, die abhängig von der Temperatur T sind und $f(\varphi)$ ist eine Hilfsfunktion abhängig von der Hilfsgröße $\varphi$. In einer regelungstechnischen Umsetzung dieses Zusammenhangs kann beispielsweise ein temperaturabhängiges Kennlinienfeld vorgegeben werden, das den Zusammenhang zwischen der gemessenen Größe $\varphi$ und der dichteunabhängigen Feuchte F enthält.

Bevorzugt ist die Hilfsfunktion f als eine monoton steigende Funktion ausgebildet.

In einer zweckmäßigen Ausgestaltung ist die Hilfsfunktion $f(\varphi)$ die identische Abbildung, sodass sich der Wert für die dichteunabhängige Feuchte F berechnet zu:

$$F(\varphi, T) = D_1(T) \, \varphi + D_2(T).$$

Auch hat sich herausgestellt, dass die Arcustangens-Funktion mit ihrem begrenzten Bildbereich als Hilfsfunktion gut geeignet ist, mit der sich der dichteunabhängige Feuchtewert F ergibt zu:

$$F(\varphi, T) = D_1(T) \, \arctan(\varphi) + D_2(T)$$

In einer bevorzugten Weiterbildung des erfindungsgemäßen Verfahrens wird ein feuchteunabhängiger Dichtewert R abhängig von mindestens zwei Resonanzfrequenzverschiebungen berechnet. Zweckmäßigerweise wird auch der feuchteunabhängige Dichtewert R abhängig von der Temperatur bestimmt.

Unter Verwendung einer weiteren Hilfsfunktion L, die eine Funktion der einzelnen Resonanzfrequenzverschiebungen $A_i$ ist, haben die Versuche gezeigt, dass die Temperaturabhängigkeit der feuchteunabhängigen Dichte R sich wie folgt berechnen läßt:

$$R\,(T, A_i) = l_1\,(T)\,L\,(A_i) + l_2\,(T).$$

Die Koeffizienten $l_1\,(T)$ und $l_2\,(T)$ sind dabei temperaturabhängige reelle Funktionen.

Alternativ zu der Hilfsfunktion L, die eine Funktion der einzelnen Resonanzfrequenzverschiebungen ist, kann der feuchteunabhängige Dichtewert R auch zusätzlich abhängig von einem Produkt aus einer der Resonanzfrequenzverschiebungen und der bei der Bestimmung des Feuchtewerts F verwendeten Hilfgröße φ berechnet werden.

In einer bevorzugten Weiterbildung des erfindungsgemäßen Verfahrens wird ein feuchteunabhängiger Massewert M abhängig von mindestens zwei Resonanzfrequenzverschiebungen berechnet. Zweckmäßigerweise wird auch der feuchteunabhängige Dichtewert R abhängig von der Temperatur bestimmt. Abhängig von der Art des Messgutes kann dieser Massewert Aussage über Gesamtmasse, flächenbezogene Masse oder Masse pro Längeneinheit geben. Die Berücksichtigung der Temperaturabhängigkeit erfolgt hierbei wie bei der Bestimmung der Dichte.

In einer bevorzugten Weiterführung des erfindungsgemäßen Verfahrens kann zusätzlich eine Partikelgröße D aus der Resonanzfrequenzverschiebung berechnet werden. Eine solche Größe ist insbesondere relevant, wenn eine bewegte Schüttung oder in einem Wirbelschichtprozess gemessen wird.

Allgemein kann dem erfindungsgemäßen Verfahren als dielektrischer Stoff ein Schüttgut, kleine diskrete Festkörper, strang-, bahnförmige oder fadenförmige Festkörper vorgesehen sein. Alle dielektrischen Stoffe können hierbei im bewegten oder im statischen Zustand gemessen werden.

Bevorzugte Ausführungsbeispiele werden nachfolgend anhand der Figuren näher erläutert. Es zeigt:

Fig. 1 die Mikrowellenleistung T über der Frequenz für drei Resonanzmoden mit unterschiedlichen Resonanzfrequenzen $f_0$, $f_1$, $f_2$,

Fig. 2 die Mikrowellenleistung T über der Frequenz für zwei Resonanzmoden, jeweils im befüllten und nicht befülltem Zustand des Mikrowellenresonators,

Fig. 3 eine Resonatoranordnung zur Transmissionsmessung,

Fig. 4 eine schematische Querschnittszeichnung zu zwei Koaxialresonatoren mit jeweils einer Resonanzmode, die nebeneinander angeordnet sind und unterschiedliche Resonanzfrequenzen aufweisen

Fig. 5 zwei Resonatoren mit jeweils einer Resonanzmode, die über einen Umschalter mit einer Mikrowellenelektronik verbunden sind,

Fig. 6 zwei Resonatoren mit jeweils einer Resonanzmode, die mit jeweils einer Mikroelektronik verbunden sind,

Fig.7 den Einsatz eines planaren Sensors in einem Wirbelschichttrockner,

Fig. 8 ein Messbeispiel zur Feuchtemessung an Lactosegranulat aus einem Wirbelschichtprozess, wobei Resonanzfrequenzverschiebungen zweier Resonanzmoden für verschiedene Dichten und Feuchten übereinander aufgetragen sind,

Fig. 9 ein weiteres Messbeispiel zur Feuchtemessung an Lactosegranulat aus einem Wirbelschichtprozess mit einem planaren Resonator mit mehreren Resonanzmoden,

Fig. 10 zeigt eine Schar von Dispersionskurven für die Abhängigkeit der Resonanzfrequenzverschiebung von der logarithmisch aufgetragenen Frequenz, und

Fig. 11 zeigt die aus der Fig. 10 gewonnene Dichte- und Bindungs- unabhängige Feuchtekalibrationskurve.

Das erfindungsgemäße Messverfahren dient zur dichte- bzw. masseunabhängigen Messung der Feuchte. Es kann ebenfalls eingesetzt werden, um die Dichte und/oder die Masse und/oder die Komgröße von dielektrischen Stoffen zu messen. Bei industriellen Prozessen ebenso wie bei Laboranwendungen sind solche Verfahren sowohl zur Steuerung des Prozesses als auch zur Qualitätsbestimmung von zentraler Bedeutung. Das erfindungsgemäße Verfahren ist auf alle dielektrischen Stoffe wie beispielsweise Schüttgüter (Getreide, Kaffee, pulverförmige Produkte, Tabak etc.), kleine diskrete Festkörper (Tabletten, medizinische Kapseln etc.), große strang- oder bahnförmige Festkörper (Holz, Papier, Zigarrettenstränge) und auf Textilien (Faserbänder, Garne oder Stoffbahnen, etc.) anwendbar. Auch bei speziellen Flüssigkeiten kann das erfindungsgemäße Messverfahren eingesetzt werden, z.B. für Aceton.

Mit Hilfe des beschriebenen Messverfahrens ist jeweils die Feuchte des Messguts, in Spezialfällen auch die Dichte oder die Masse sowie beispielsweise bei Granulaten auch die Korngröße des Messgutes, bestimmbar. Die zu bestimmende Masse des dielektrischen Stoffs kann eine Gesamtmasse oder die Masse pro Flächen- oder Längeneinheit sein.

Das erfindungsgemäße Verfahren ist überall dort anwendbar, wo ein dichte- und masseunabhängiges Feuchtesignal zur Online-Prozesssteuerung vorgesehen ist. Es kann dabei auch bei sich schnell bewegendem Messgut eingesetzt werden. Insbesondere bei der Anwendung in Wirbelschichtprozessen eröffnet das erfindungsgemäße Verfahren die Möglichkeit, die Prozessqualität zu steigern.

Bei dem erfindungsgemäßen Verfahren handelt es sich um eine Zwei-Parameter-Messung ohne Verwendung der Dämpfung einer Resonanzmode. Die Bestimmung der zwei gemessenen Parameter erfolgt unter Verwendung zweier Resonanzmoden, deren Resonanzfrequenzen einen hinreichend großen Abstand zueinander aufweisen. Bevorzugt liegen die Resonanzfrequenzen um mindestens 0,5 Gigahertz auseinander. Zweckmäßigerweise können auch drei oder mehr Gigahertz als Abstand zwischen den Resonanzfrequenzen vorgesehen sein.

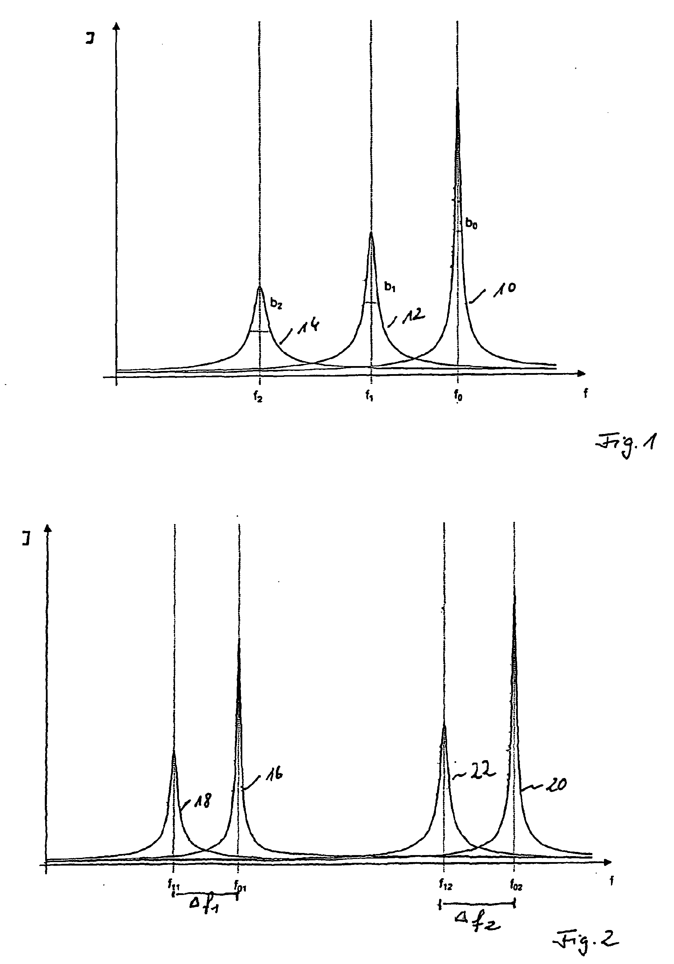

Figur 1 zeigt drei Resonanzkurven 10, 12, 14, die jeweils durch ihre Resonanzfrequenz $f_0$, $f_1$ $f_2$ und die Breite der Resonanzkurve $b_0$, $b_1$ und $b_2$ gekennzeichnet sind. In dem dargestellten Beispiel ist es so, dass die Amplitude der Resonanzkurve bzw. die Mikrowellenleistung 10 deutlich größer ist als die Amplituden der Resonanzkurven 12 und 14. Für das erfindungsgemäße Messverfahren sind aber die Größen der Resonanzamplituden und die Breiten der Resonanzkurven $b_0$, $b_1$, $b_2$ bei der Bestimmung der Feuchte ohne Bedeutung.

Von Interesse für eine Auswertung der Messergebnisse ist die Veränderung einer Resonanzfrequenz einer Mode im Resonator, in dessen Feldbereich sich das Produkt befindet, gegenüber der Resonanzfrequenz derselben Mode des leeren Resonators. Die Differenz der beiden Resonanzfrequenzen wird als sogenannte Resonanzfrequenzverstimmung oder Resonanzfrequenzverschiebung bezeichnet.

Figur 2 zeigt ein einfaches Beispiel für zwei Resonanzfrequenzverschiebungen, wobei eine erste Resonanzmode eine geringere Resonanzfrequenz aufweist. In Figur 2 dargestellt ist die Resonanzfrequenz $f_{01}$, die den Frequenzgang bei nicht gefülltem Resonator für die erste Resonanzfrequenz zeigt. Die zugehörige Resonanzkurve ist mit 16 bezeichnet. Im befüllten Zustand des Resonators ergibt sich die Resonanzfrequenz $f_{11}$ mit der Resonanzkurve 18. Ebenfalls eingezeichnet ist die für die erste Frequenz sich ergebende Resonanzfrequenzverschiebung $\Delta f_1$. Die Resonanzfrequenzverschiebung der Resonanzfrequenzen tritt durch das zu messende Produkt auf. Für die größere Frequenz ist ebenfalls die Resonanzfrequenz $f_{02}$ dargestellt. Die zugehörige Resonanzkurve ist mit 20 gekennzeichnet. Durch das zu messende Material tritt eine Verschiebung der Resonanzfrequenz $f_{02}$ hin zu der Größe $f_{12}$ auf. Die zugehörige Resonanzfrequenzverschiebung ist als $\Delta f_2$ in Figur 2 dargestellt.

Die Messgrößen $\Delta f_1$, $\Delta f_2$ sind stark beeinflusst von der Masse des zu messenden Produktes, die sich im Feldbereich des Mikrowellenresonators befindet. Bei dem Einsatz für pulverförmiges Material hängen die Messgrößen $\Delta f_1$, $\Delta f_2$ auch von der Granulatgröße ab. Bei flächenhaftem Material mit geringer Schichtdicke hängt das Messergebnis stark von der gemessenen Schichtdicke ab.

Die Messgrößen $\Delta f_1$, $\Delta f_2$ sind für jeden Resonanzmodus, dessen Messfeld das Produkt durchsetzt, proportional zur Masse des Produktes im Messfeld. Dies bedeutet, dass bei einer vollständigen Ausfüllung des Messfeldes die Messgrößen proportional zu seiner Dichte sind. Da die Dielektrizitätskonstante von Wasser wesentlich größer ist als die Dielektrizitätskonstante von Trockensubstanzen, hängen die Messgrößen $\Delta f_1$, $\Delta f_2$ auch stark von der Feuchte des Materials ab. Die Dielektrizitätskonstante von freiem Wasser hängt im Mikrowellenbereich zudem stark von der Frequenz ab. Oberhalb einer Frequenz von einem Gigahertz nimmt sie mit zunehmender Frequenz deutlich ab und nähert sich bei Frequenzen von über 30 Gigahertz einem niedrigen, durch die Elektronenverteilung des Atoms bestimmten Wert. Das bedeutet, dass die Dielektrizitätskonstante von feuchtem Messgut bei einer hohen Frequenz niedriger ist als bei einer niedrigeren Frequenz.

Ist $\Delta f_1$ die Resonanzverstimmung gegenüber dem Leerzustand eines zu vermessenden Stoffes in der ersten Resonanzmode mit der Leerresonanzfrequenz $f_{01}$ und ist $\Delta f_2$ die Resonanzfrequenzverstimmung gegenüber dem Leerzustand eines zu vermessenden Stoffs in der zweiten Resonanzmode mit einer Leerresonanzfrequenz $f_{02}$, dann sind die Größen $\Delta f_1$, $\Delta f_2$ jeweils proportional zu der Masse. $\Delta f_1$ und $\Delta f_2$ hängen aber in unterschiedlicher Weise von der Feuchte des Materials ab, wenn die beiden Resonanzfrequenzen der Moden genügend weit voneinander entfernt liegen. Es hat sich gezeigt, dass ein Abstand von $|f_{02} - f_{01}| \geq 0{,}5$ Gigahertz bereits ein genügend großer Abstand ist. Deutlichere Messergebnisse lassen sich erzielen, wenn der Abstand der Resonanzfrequenz $|f_{02} - f_{01}| \geq 3{,}0$ Gigahertz ist.

Untersuchungen haben gezeigt, dass der Quotient $\Delta f_2 / \Delta f_1$ unabhängig von der Produktmasse, aber ein Maß für die Produktfeuchte ist. Der Quotient wird als indirekt gemessener Feuchtewert an einer direkt gemessenen Referenzfeuchte kalibriert.

Nachfolgend sei:

$$A1 = \Delta f_1 \text{ und } A2 = \Delta f_2.$$

Es kann vorgesehen sein, um den Wertebereich der Mikrowellenmesswerte einzugrenzen, eine Hilfsgröße φ = arctan (A2/A1) zu verwenden.

Messergebnisse zeigen, dass, wenn in einem Koordinatensystem die Referenzgrößen A2 gegen A1 aufgetragen werden, die Messpunkte unterschiedlicher Masse aber gleicher Feuchte auf einer Geraden liegen und dass diese durch den Nullpunkt laufen. Messpunkte gleicher Feuchte aber unterschiedlicher Masse liegen jeweils auf Geraden, deren Steigung feuchteabhängig ist.

Zur Steigerung der Messgenauigkeit werden erfindungsgemäß nicht nur zwei ausreichend weit auseinander liegende Resonanzmoden mit dem Messgut in Wechselwirkung gebracht werden, sondern auch drei, vier oder mehr. In diesem Fall können für die einzelnen Resonanzmoden Kopplungsparameter K definiert werden. Die Kopplungsparameter K werden für die einzelnen Resonanzmoden mit Hilfe eines Standard-Probekörpers bestimmt, sodass die Resonanzfrequenzverstimmung der ersten Mode A1 bei Vermessung des Standard-Probekörpers zur gleichen Resonanzfrequenzverschiebung wie in den anderen Resonanzmoden führt, wenn derselbe Standard-Probekörper eingesetzt wird. Werden beispielsweise vier Resonanzmoden betrachtet, so ergibt sich folgende Bedingungsgleichung für die Kopplungsparameter K2, K3 und K4:

$$A(f1) = K2 \cdot A(f2) = K3 \cdot A(f3) = K4 \cdot A(f4)$$

(bei Vermessung des Standard-Probekörpers).

Zur Kompensation des Temperatureinflusses auf die dichteunabhängige Feuchte F wird durch einen gesonderten Temperatursensor die Produkttemperatur T gemessen. Untersuchungen haben ergeben, dass ein linearer Einfluss der Produkttemperatur T auf die Koeffizienten bei der Feuchtekurve ausreichend ist. Wird für die dichteunabhängige Feuchte der Ansatz gewählt:

$$F(\varphi, T) = C1(T) \cdot \arctan(\varphi) + C2(T),$$

so können die Temperaturkoeffizienten C1 und C2 jeweils mit einer linearen Abhängigkeit von der Temperatur ausreichend genau dargestellt werden. Es ergibt sich:

$$C1 = C_1^{(1)} \cdot T + C_1^{(2)},$$

$$C2 = C_2^{(1)} \cdot T + C_2^{(2)},$$

mit den reellen Koeffizienten $C_1^{(1)}$ $C_2^{(1)}$, $C_2^{(1)}$, $C_2^{(2)}$. Wurde mit der vorstehenden Methode eine nur von der Materialfeuchte abhängige Größe berechnet, die aber von der Materialdichte, der Materialmasse-sowie der Korngröße unabhängig ist, kann durch Verwendung eines der Masse proportionalen Wertes A1, A2 unter Nutzung der nur feuchteabhängigen Hilfsgröße φ die Masse M im Messfeld und/oder die Materialdichte R und/oder die Korngröße K bestimmt werden. Wichtig hierbei ist, dass die Hilfsgröße φ feuchteabhängig und masseunabhängig ist. Hierdurch bietet es sich an, mit Hilfe von φ eine Korrektur des masseabhängigen Wertes A1, A2 zu bestimmen und so den Feuchtigkeitsanteil herauszurechnen.

Wie bereits bei der Feuchtemessung haben hier Messergebnisse gezeigt, dass ein linearer Ansatz zur Auswertung der Messgrößen bereits sehr gute Ergebnisse liefert. Zur Bestimmung eines feuchtigkeitsunabhängigen Massenwertes wird der Ansatz gewählt:

$$M = D2\ A2 + D1\ A1 \cdot \varphi + D0,$$

wobei D0, D1, D2 reelle Zahlen sind.

Bei diesem Ansatz wird deutlich, dass die Masse M sich aus einem masseabhängigen Anteil A2 berechnet, der durch einen nur feuchteabhängigen Anteil φ korrigiert wird.

In einem alternativen Ansatz kann die Masse sich auch berechnen zu:

$$M = D1\ A1 + D2\ A2 + D0.$$

Diese Ansätze können ebenfalls zur Auswertung einer Dichte R herangezogen werden, wenn durch den Aufbau des Messprozesses sichergestellt ist, dass eine vollständige Massebelegung des Mikrowellenresonators vorliegt, d.h. dass das gesamte Messfeld des Resonators mit Messgut ausgefüllt ist.

Diese Ansätze sind ebenfalls gültig zur Bestimmung einer Korngröße K in Schüttgütern und in Wirbelschichtprozessen.

Auch bei der Masse und/oder Dichtebestimmung und/oder der Korngrößenbestimmung kann eine temperaturabhängige Korrektur der Messwerte erfolgen. Auch hier bietet es sich wieder an, die Koeffizienten D1, D2, mit denen die Resonanzfrequenzverschiebung in das Messergebnis eingehen, temperatur-abhängig darzustellen:

$$D1 = D_1^{(1)} \cdot T + D_1^{(2)},$$

$$D2 = D_2^{(1)} \cdot T + D_2^{(2)},$$

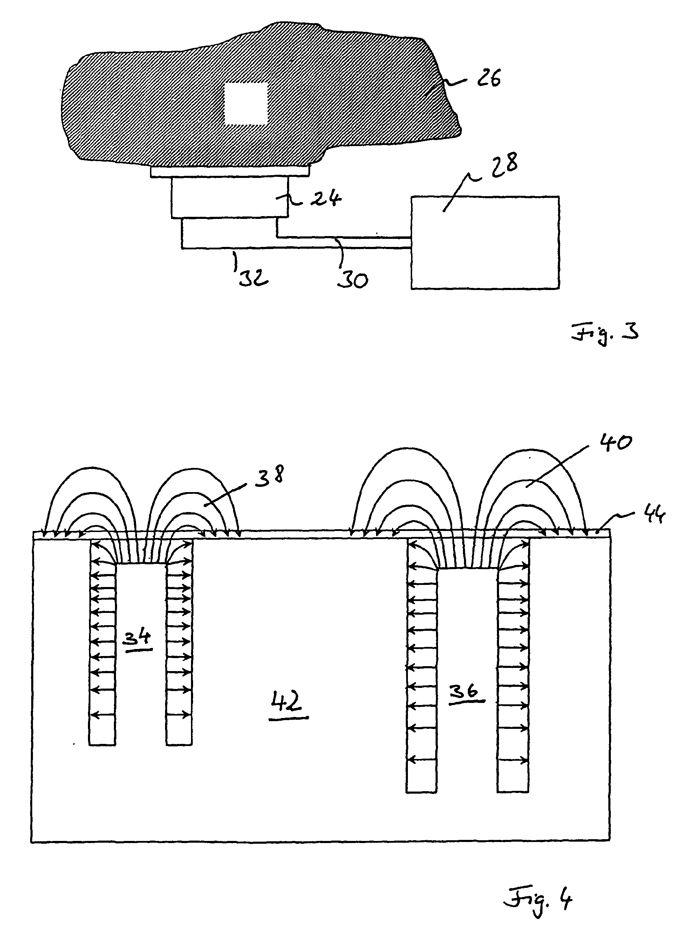

Figur 3 zeigt in einer stark schematischen Ansicht eine mögliche gerätetechnische Umsetzung der Erfindung. Figur 3 zeigt einen in Transmission betriebenen planaren Mikrowellenresonator 24, dessen Feld ein Messgut 26 durchsetzt. Die Dielektrizitätskonstante des Messguts 26 führt dazu, dass sich die die Resonanzmoden des Resonator 24 in charakteristischer Weise ändern. In der Mikrowelleneinheit 28 werden Mikrowellen mit variabler Frequenz von einem Mikrowellengenerator erzeugt und über ein erstes Koaxialkabel 30 dem Mikrowellenresonator 24 zugeführt. Hier werden die Mikrowellen durch eine Antenne in den Resonator eingekoppelt. Im Resonator bilden sich verschiedene Resonanzmoden aus, deren Feldlinien bis in das Messgut 26 reichen. Durch eine weitere Antenne (nicht dargestellt) in dem Mikrowellenresonator 24 werden die Mikrowellen aus dem Resonator ausgekoppelt und über ein zweites Koaxialkabel 32 zu der Mikrowelleneinheit 28 zurückgeführt. Hier erfolgt die Bestimmung der Resonanzfrequenzen des befüllten Resonators. Durch den Vergleich mit den zuvor bestimmten Resonanzfrequenzen des leeren Mikrowellenresonators besteht dann die Möglichkeit, die Resonanzfrequenzverschiebungen aufgrund des Messguts 26 zu bestimmen. Eine Resonanzfrequenz lässt sich beispielsweise über das Maximum in der Resonanzkurve bestimmen. Alternativ hierzu ist es auch möglich, die Phasenverschiebung des reflektierten Feldes gegenüber dem ausgesandten Feld zu betrachten. Bei der Resonanzfrequenz liegt ein Nulldurchgang in der Phasenverschiebung von einlaufender zu auslaufender Welle vor.

Wird ein Mikrowellenresonator in Reflektion betrieben, so ist eine Ausgestaltung mit einem Mikrowellenkoaxialkabel zwischen Auswerteeinheit und Mikrowellenresonator ausreichend. Gemessen wird die über dieses Kabel reflektierte Mikrowellenleistung. Der Resonanzfall wird daran erkannt, dass ein minimum der reflektierten Leistung auftritt.

Figur 4 zeigt den näheren Aufbau eines Mikrowellenresonators. Hierbei handelt es sich um zwei Koaxialresonatoren 34 und 36. Resonator 34 ist für die höhere Resonanzfrequenz vorgesehen, während Resonator 36 eine niedrigere Resonanzfrequenz aufweist. In jedem der Resonatoren 34 und 36 treten Feldlinien 38, 40 aus dem Resonatorkörper 42 aus. Der Resonator kann durch eine dielektrische Abdeckplatte 44 geschützt sein. Bei diesem Resonator befindet sich das zu messende Messgut im Bereich der ausgetretenen Feldlinien 38 und 40.

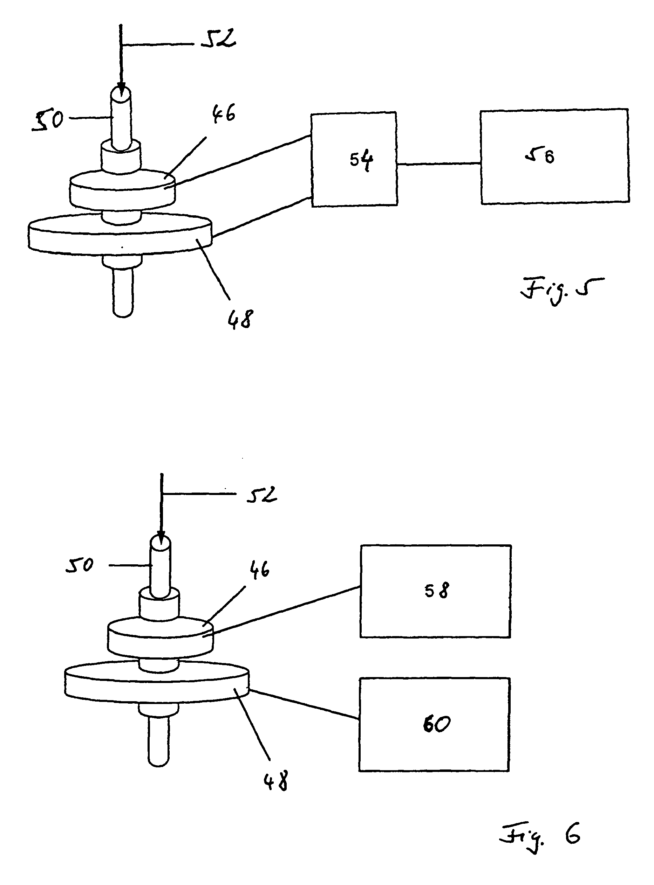

Die Figuren 5 und 6 zeigen eine weitere Ausgestaltung, bei der das Produkt mit unterschiedlichen Resonatoren vermessen wird, deren Resonanzfrequenzen weit auseinander liegen. Figur 5 zeigt zwei übereinander angeordnete Mikrowellenresonatoren 46, 48, die über ein Probenrohr 50 miteinander in Verbindung stehen. Der schematisch angedeutete Materialfluss 52 wird über das Probenrohr 50 zuerst dem Mikrowellenresonator 46 zugeführt und tritt von hier aus und in den Mikrowellenresonator 48 ein. Es ist leicht einsichtig, dass für eine fehlerfreie Messung der Abstand eventuell im Messgut vorliegender Inhomogenitäten deutlich größer sein muss als der räumliche Abstand zwischen den beiden Resonatoren 46 und 48.

In dem in Figur 5 dargestellten Ausführungsbeispiel ist eine Mikrowellen-elektronik 56 vorgesehen, die einen Mikrowellengenerator, einen Mikrowellendetektor und eine CPU aufweist. Über einen Mikrowellenumschalter 54 werden die Signale an die Mikrowellenresonatoren 46 oder 48 weitergeleitet. Auch die zurücklaufenden Signale der beiden Mikrowellenresonatoren fließen über den Umschalter 54 an die Mikrowellenelektronik zur Auswertung zurück.

Figur 6 zeigt einen im Prinzip ähnlichen Aufbau von Mikrowellenresonatoren wie in Figur 5. Es wird jedoch auf den Mikrowellenumschalter verzichtet, und statt dessen werden zwei Mikrowellenelektroniken 58 und 60 bereitgestellt, die die in die Resonatoren 46 und 48 eingekoppelten Mikrowellen generieren, die ausgekoppelten Anteile detektieren und die gemessenen Resonanzwerte auswerten.

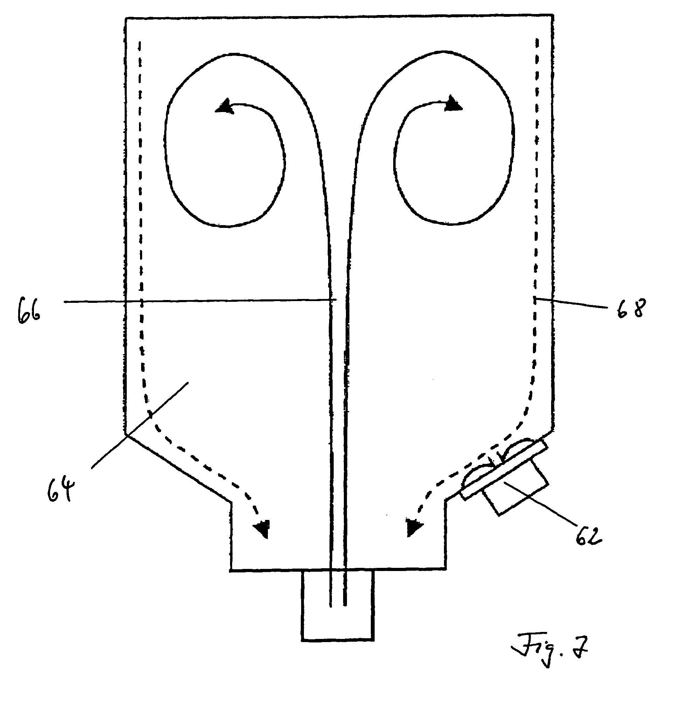

Figur 7 zeigt die Anwendung eines Planarsensors 62 in einem schematisch dargestellten Wirbelschichttrockner 64. In dem beispielhaft dargestellten Wirbelschichttrockner wird zentral Heißluft 66 eingeblasen, die zu einer Bewegung des Materials 68 führt. Im Zuge der Materialbewegung 68 wird das Material entlang einer kegelförmigen Verjüngung des Wirbelschichttrockners 64 an einem Planarsensor 62 vorbeigeführt, der in mindestens zwei Resonanzmoden mit dem erforderlichen Frequenzabstand messen kann.

In dem in Figur 7 gezeigten Beispiel ist der Mikrowellenresonator 62 in einem Schulterabschnitt des Wirbelschichttrockners angeordnet. Auf diese Art und Weise wird sichergestellt, dass ein gleichmäßiger Materialstrom an dem Mikrowellenresonator 62 vorbeikommt.

Durch die Feuchte- und Dichtemessung im Wirbelschichtprozess ist es möglich, diesen zu steuern. Es ist z.B. möglich, während der Granulierungsphase die mittleren Korngröße zu steuern oder zu regeln. Wie bereits oben dargestellt, erlaubt das Verfahren mit der Hilfsgröße $\varphi$ auch eine Online-Messung der Korngröße. Die gemessene Korngröße wird an eine Steuerung eines Trockners weitergeleitet, um dessen Prozessparameter wie beispielsweise die Temperatur zu steuern. Außerdem kann auch der Endpunkt des Trocknungsprozesses durch die dichteunabhängige Feuchtemessung festgelegt werden, indem der Trocknungsprozess bei Erreichen einer vorbestimmten Endfeuchte abschaltet.

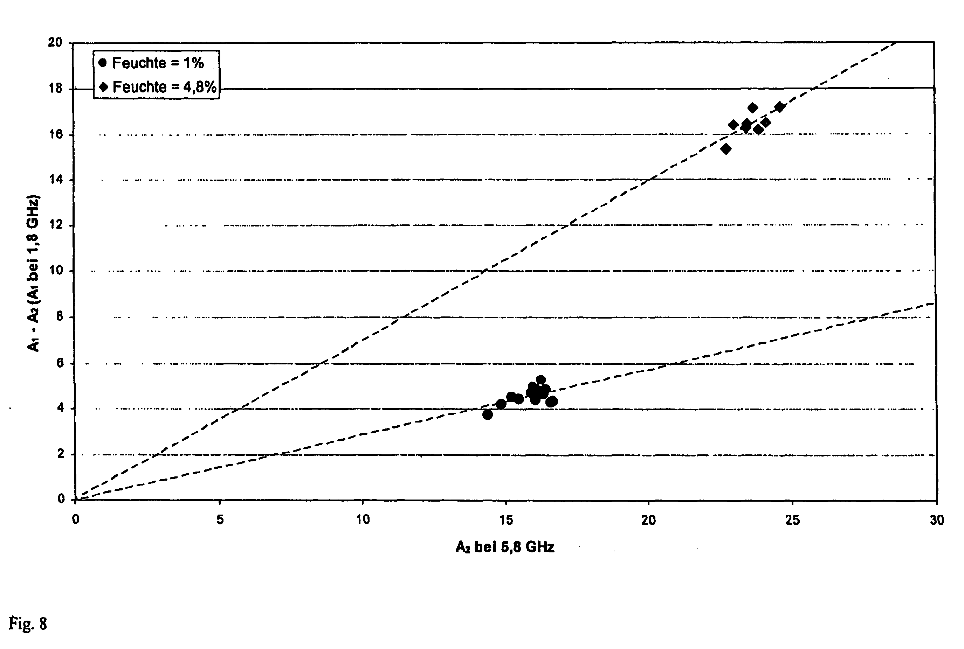

Figur 8 zeigt beispielhaft die Feuchtemessung an Lactosegranulat aus einem Wirbelschichtprozess mit einem planaren Resonator mit mehreren Resonanzmoden. Dargestellt sind Messpunkte mit zwei verschiedenen Feuchten (1% und 4,8%) und verschiedenen Dichten. Messungen erfolgten bei zwei verschiedenen Resonanzmoden (1,8 GHz und 5,8 GHz). Aufgetragen ist hierbei die Differenz der Resonanzfrequenzverschiebungen $A_1$-$A_2$ über der Resonanz-frequenverschiebung der Mode bei der höheren Frequenz $A_2$. Es zeigt sich, dass die Punkte gleicher Feuchte auf Geraden liegen, und ihre Lage auf dieser Gerade durch die jeweilige Materialdichte, bzw. die Materialmasse im Messfeld bestimmt wird. Die Punkte mit unterschiedlicher Feuchte liegen auf Geraden durch den Koordinatenursprung, deren Steigung feuchteabhängig ist. Der dichteunabhängige Feuchtewert berechnet sich in diesem Beispiel aus der Hilfsgröße $\varphi = (A_1$-$A_2) / A_2$.

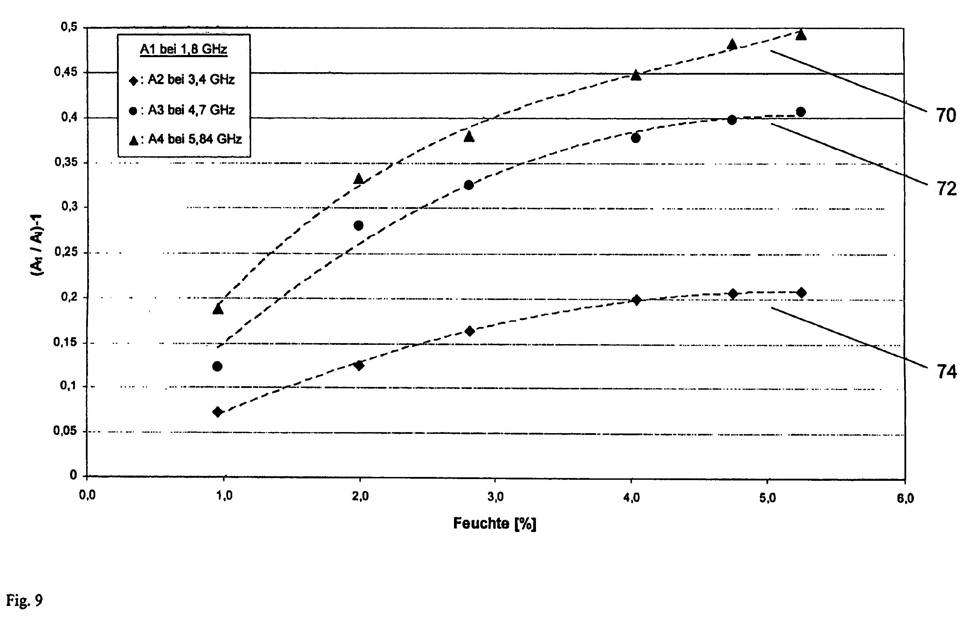

Figur 9 zeigt beispielhaft die Feuchtemessung an Lactosegranulat aus einem Wirbelschichtprozess mit einem planaren Resonator mit mehreren Resonanzmoden. Dargestellt ist jeweils die Hilfsgröße $\varphi$ für die Feuchtemessung, die aus dem Quotient von zwei Resonanzfrequenzverschiebungen $A_1$ und $A_i$ (i = 2, 3, 4) nach folgender Vorschrift gebildet wird: $\varphi = (A_1/A_i)$-1. Die unterschiedlichen Kurven 70, 72, 74 zeigen für unterschiedliche Proben, den Wert der Hilfsgrößen $(A_1/A_i$ -1) für Resonanzmoden bei 3,4 GHz ($A_2$), 4,7 GHz ($A_3$) und 5,84 GHz ($A_4$). Die Abhängigkeit der Messwerte von der Feuchte ist deutlich zu erkennen, wobei der Messeffekt größer wird, je weiter die gemessenen Resonanzmoden auseinanderliegen.

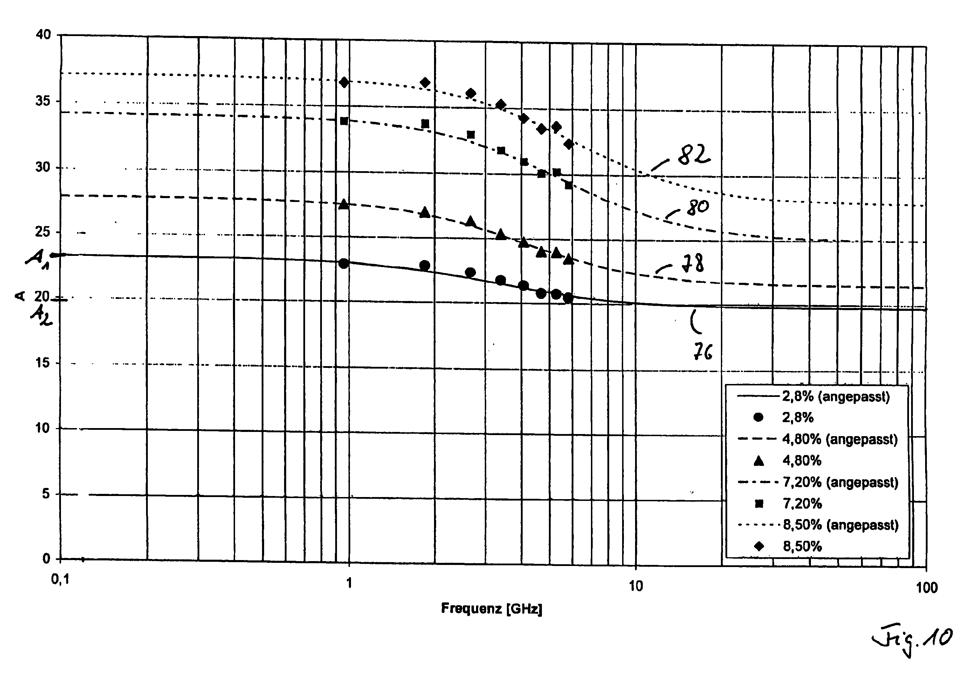

Figur 10 zeigt eine Schar von Dispersionskurven 76, 78, 80 und 82. Die Kurven zeigen die Resonanzfrequenzverschiebung A über der logarithmisch aufgetragenen Frequenz f. Die eingezeichneten Messpunkte entsprechen der Messung eines Probekörpers bei unterschiedlichen Feuchtewerten. Bei einer Feuchte von 2,8 % sind die aufgenommenen Messwerte (ausgefüllte Kreise) sehr gut verträglich mit der Kurve 76. Ebenso liegen die Messwerte bei 4,8 % Feuchte, 7,2 % Feuchte und 8,5 % Feuchte sehr nah bei den jeweils angepassten Kurven 78, 80 und 82. Aus den Kurven, die einen allgemeinen Verlauf haben

$$A(f) = A_1 + \frac{A_2}{1 + (2\pi f\tau)^2}$$

wobei $A_1$ und $A_2$ die Resonanzfrequenzverschiebungen bei geringer und sehr hoher Frequenz beschreiben und $\tau$ ein Maß für die Stärke der Wasserbindung ist. Die aus der Messkurve bestimmten Werte $A_1$ und $A_2$ sind für die Kurve 76 beispielhaft in Figur 10 eingezeichnet. Die Größen $A_1$ und $A_2$ geben Aufschluss über die Resonanzfrequenzverschiebung bei jeweils einer sehr kleinen Frequenz bzw. bei einer sehr großen Frequenz. Die Größen $A_1$ und $A_2$ können mit dem erfindungsgemäßen Verfahren so ausgewertet werden, als ob es sich um gemessene Werte handelte.

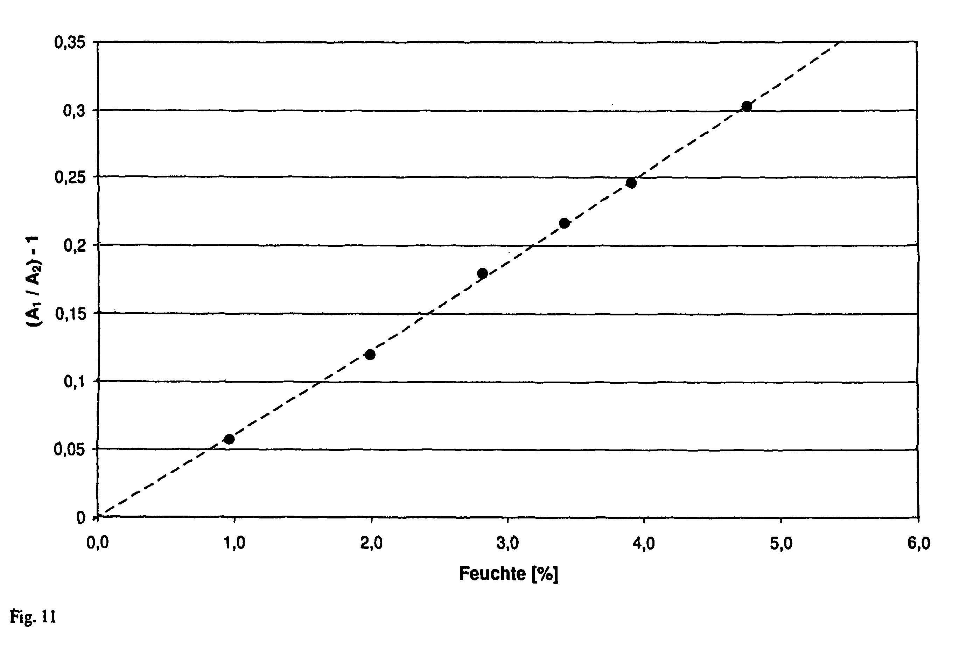

Fig.11 zeigt die aus den A1 und A2-Werten der Fig. 10 gewonnenen Werte

$$\varphi = \frac{A_1}{A_2} - 1$$

als Funktion der Feuchte. Diese Feuchtekalibrationskurve ist nicht nur Masse-, Dichte- unabhängig, sondern auch von der Stärke der Bindung des Wassers im Produkt unabhängig. Dies bedeutet auch eine deutliche Verringerung des Temperatureinflusses auf die Kalibration.

Die besonderen Vorteile der Erfindung gegenüber den bisher bekannten Messproben resultieren aus der Tatsache, dass eine Dämpfungsmessung nicht mehr erforderlich ist, sondern lediglich eine Resonanzfrequenz bzw. deren Verschiebung erfasst werden muss. Da die Frequenz bei maximaler Resonanzamplitude wesentlich einfacher zu messen ist als beispielsweise die Resonanzbreite bei halber Amplitude, ist die Messung deutlich schneller durchzuführen als die bisherigen Meßmethoden. Für die Messung der Resonanzbreite beispielsweise muss frequenzmäßig die gesamte Resonanzkurve durchgefahren und gemessen werden. Dies führt beispielsweise bei bewegten Gütern zu Problemen, da sich das Messgut während des Durchfahrens der Resonanzkurve nicht verschieben darf. Im Gegensatz dazu braucht bei der neuen Meßmethode nur der Bereich des Resonanzmaximums untersucht werden, so dass sich Bewegungen des Produkts während des Messvorgangs nicht störend auswirken. Gerade bei Wirbelschichtprozessen und bei bewegten Schüttgütern kann somit auch ein schnell bewegtes Produkt leicht vermessen werden.

Ein weiterer Vorteil des erfindungsgemäßen Verfahrens ergibt sich auch aus einem Vergleich mit der bisherigen Dämpfungs- und Breitenmessung der Resonanzkurve: Bei größeren Dämpfungswerten spielen Nichtlinearitäten der Mikrowellendioden eine Rolle, die das Messergebnis verfälschen können. Im Gegensatz dazu fallen bei dem vorliegenden Messverfahren Nichtlinearitäten der Mikrowellendioden nicht ins Gewicht.

Ein weiterer besonderer Vorteil ergibt sich daraus, dass die Variation der Frequenz sich in einem engen Bereich um das Maximum der aktuellen Resonanz bewegen kann. Im Gegensatz zu einer Dämpfungsmessung ist es nicht mehr erforderlich, die gesamte Resonanzkurve durchzufahren. Hierdurch wird eine Hochgeschwindigkeitsmessung mit $10^4$ bis $10^5$ Messwerten pro Sekunde möglich.

Auch kann der Mikrowellenresonator selbst für das erfindungsgemäße Verfahren bedeutend einfacher ausgeführt sein, als bei einer Dämpfungsmessung. So können beispielsweise aufwendige und teure Mikrowellenisolatoren zur Verhinderung der Rückstreuung in die Elektronik eingespart werden.

Es kann auch im Gegensatz zu herkömmlichen Messverfahren, die nach der Mikrowellen-Resonanzmethode arbeiten, bei der Erfindung die Forderung nach vollständiger Abstrahlfreiheit der Mikrowellenresonatoren fallengelassen werden. Abstrahlung, bei der der Resonator einen Teil seiner Schwingungsenergie in Form von abgestrahlten Mikrowellen verliert, wirkt sich bei der Mikrowellenmessung immer hauptsächlich durch eine Zunahme der Breite der Resonanzkurve aus. Eine Dämpfungs- oder Breitenmessung verlangt somit die unbedingte Einhaltung der Forderung nach einer vollständigen Abstrahlfreiheit des Resonators. Anderenfalls werden die gemessenen Verluste auf die Produktfeuchte zurückgeführt, d.h. sie führen zu erheblichen Messfehlern. Erfindungsgemäß wird auf die Dämpfungsmessung verzichtet, sodass innerhalb gewisser Toleranzen auch Abstrahlung von Mikrowellen zugelassen werden. Dadurch können auch Mikrowellenmoden mit relativ großem Streufeld und einer gewissen Abstrahlung zur Anwendung gebracht werden, solange die Abstrahlung die Resonanzfrequenz nicht zu stark beeinflußt. Ein besonderer Vorteil des erfindungsgemäßen Verfahrens beim Einsatz von Planarsensoren besteht darin, dass sich die Eindringtiefe vergrößert, so dass beispielsweise auf eine berührende Messung verzichtet werden kann.

Die Resonanzfrequenzverschiebungen lassen sich auch bei Wirbelschichtprozessen einfach Online erfassen, um damit zuverlässige Feuchtewerte für eine Steuerung des Granulierungsvorgangs und eines anschließenden Trocknungsvorgangs zu generieren.

**Patentansprüche**

1. Verfahren zur Messung eines Feuchtewerts F von dielektrischen Stoffen unter Verwendung von mindestens einem Mikrowellenresonator, wobei für mindestens zwei Resonanzmoden mit voneinander verschiedenen Resonanzfrequenzen jeweils eine Verschiebung gemessen wird, wobei die Verschiebungen jeweils als Differenz der Resonanzfrequenz des leeren Resonators gegenüber dem Resonator, in dessen Feldbereich sich der dielektrische Stoff befindet, bestimmt werden, und aus den gemessenen Verschiebungen der Resonanzfrequenz ein dichteunabhängiger Feuchtewert F berechnet wird, wobei der dichteunabhängige Feuchtewert F abhängig von einem Quotienten aus zwei Verschiebungen der Resonanzfrequenzen berechnet wird und der dichteunabhängige Feuchtewert F unabhängig von einer auftretenden Dämpfung in jeder der Resonanzmoden bestimmt wird und drei oder mehr Messpunkte zur Resonanzfrequenzverschiebung aus einer Dispersionskurve A (f) der folgenden Form

$$A(f) = A_1 + \frac{A_2}{1 + (2\pi f \tau)^2}$$

bestimmt werden, wobei $A_1$, $A_2$ und $\tau$ reellwertige Konstanten sind, von denen $A_1$ und $A_2$ aufgrund der gemessenen Werte festgelegt werden und dass die Werte $A_1$ und $A_2$ aus der Dispersionskurve als Resonanzfrequenzverschiebungen bei einer kleinen und bei einer großen Frequenz angesetzt und ausgewertet werden.

2. Verfahren nach Anspruch 1, **dadurch gekennzeichnet, dass** zusätzlich ein feuchteunabhängiger Dichtewert R und/oder ein feuchteunabhängiger Massewert M und/oder eine Partikelgröße D abhängig von mindestens zwei Resonanzfrequenzverschiebungen berechnet wird.

3. Verfahren nach Anspruch 1 oder 2, **dadurch gekennzeichnet, dass** als dielektrischer Stoff ein Schüttgut, kleine diskrete Festkörper, strang-, bahnförmige oder fadenförmige Festkörper vorgesehen sind.

**4.** Verfahren nach einem der Ansprüche 1 bis 3, **dadurch gekennzeichnet, dass** in einem Granulations-, Instantisierungs-, Coating- oder Trocknungsprozess der gemessene Feuchtewert an eine Prozesssteuerung weitergeleitet wird, die abhängig von dem anliegenden Feuchtewert den Prozess steuert und/oder regelt.

**5.** Verfahren nach Anspruch 4, **dadurch gekennzeichnet, dass** die Prozesssteuerung anhand der gemessenen Feuchtewerte ein Prozessende oder ein Ende für einen Prozessabschnitt ermittelt.

**6.** Verfahren nach einem der Ansprüche 2 bis 5, **dadurch gekennzeichnet, dass** in einem Granulations-, Instantisierungs-, Coating- oder Trocknungsprozess der gemessene Wert für Masse, Dichte und/oder Korngröße an eine Prozesssteuerung weitergeleitet wird, die abhängig von den anliegenden Werten für Masse, Dichte und/oder Korngröße den Prozess steuert und/oder regelt.

**7.** Verfahren nach einem der Ansprüche 1 bis 6, **dadurch gekennzeichnet, dass** mindestens zwei Resonanzmoden jeweils eine Resonanzfrequenz besitzen, die voneinander einen Abstand von mindestens 0.5 GHz besitzen.

**Claims**

**1.** Method for measuring a moisture value F of dielectric materials using at least one microwave resonator, wherein a shift in the resonant frequency is evaluated respectively for at least two resonance modes with resonant frequencies which are different from one another, wherein the shifts are determined respectively from the difference between the resonant frequency of the empty resonator and the resonant frequency of the resonator having the dielectric material located in its field range, and a density-independent moisture value F is calculated from the measured shifts in the resonant frequency, wherein the density-independent moisture value F is calculated depending on a quotient of two shifts of the resonant frequencies and the density-independent moisture value F is determined independent of an occurring attenuation in each of the resonance modes and three or more measuring points for the resonant frequency shift are determined from a dispersion curve A (f) of the following form

$$A(f) = A_1 + \frac{A_2}{1 + (2\pi f \tau)^2}$$

$A_1$, $A_2$ and $\tau$ being real-value constants, of which $A_1$ and $A_2$ are established according to the measured values and the values $A_1$ and $A_2$ from the dispersion curve are set and evaluated as resonant frequency shifts at a low frequency and at a high frequency.

**2.** Method according to Claim 1, **characterised in that** additionally a moisture-independent density value R and/or a moisture-independent mass value M and/or a particle size D is calculated depending on at least two resonant frequency shifts.

**3.** Method according to one of Claims 1 or 2, **characterised in that** a bulk material, small discrete solids, strand-shaped, web-shaped or fibre-shaped solids are provided as dielectric material.

**4.** Method according to Claim 1 to 3, **characterised in that** in a granulation, instantisation, coating or drying process the measured moisture value is forwarded to a process control which controls and/or regulates the process depending on the applied moisture value.

**5.** Method according to Claim 4, **characterised in that** the process control using the measured moisture values determines a process end or an end of a process stage.

**6.** Method according to one of Claims 2 to 5, **characterised in that** in a granulation, instantisation, coating or drying process the measured value for mass, density and/or particle size is forwarded to a process control, which controls and/or regulates the process depending on the applied values for mass, density and/or particle size.

**7.** Method according to one of Claims 1 to 6, **characterised in that** at least two resonance modes respectively have a resonant frequency which have a spacing from one another of at least 0.5 GHz.

**Revendications**

1. Procédé de mesure d'une valeur d'humidité F de matériaux diélectriques avec utilisation d'au moins un résonateur hyperfréquence, un déplacement étant mesuré respectivement pour au moins deux modes de résonance avec des fréquences de résonance différentes les unes des autres, les déplacements étant définis respectivement en tant que différence de la fréquence de résonance du résonateur vide par rapport au résonateur dans la zone de champ duquel se trouve le matériau diélectrique, et une valeur d'humidité F indépendante de la densité étant calculée à partir des déplacements mesurés de la fréquence de résonance, la valeur d'humidité F indépendante de la densité étant calculée en fonction d'un quotient de deux déplacements des fréquences de résonance, et la valeur d'humidité F indépendante de la densité étant définie indépendamment d'un amortissement qui apparaît dans chacun des modes de résonance, et trois points de mesure ou plus étant définis pour le déplacement de la fréquence de résonance à partir d'une courbe de dispersion A (f) ayant la forme suivante

$$A(f) = A_1 + \frac{A_2}{1+(2\pi f \tau)^2}$$

$A_1$, $A_2$ et $\tau$ étant des constantes de valeur réelle parmi lesquelles $A_1$ et $A_2$ sont stipulées sur la base des valeurs mesurées, et les valeurs $A_1$ et $A_2$ issues de la courbe de dispersion étant estimées et analysées en tant que déplacements de la fréquence de résonance pour une petite fréquence et pour une grande fréquence.

2. Procédé selon la revendication 1, **caractérisé en ce que**, en plus, une valeur de densité R indépendante de l'humidité et/ou une valeur de masse M indépendante de l'humidité et/ou une grandeur de particule D est calculée en fonction d'au moins deux déplacements de la fréquence de résonance.

3. Procédé selon la revendication 1 ou 2, **caractérisé en ce que**, en tant que matériau diélectrique, il est prévu un produit en vrac, des petits corps solides discrets, des corps solides en forme de cordon, de bande ou en forme de fil.

4. Procédé selon l'une des revendications 1 à 3, **caractérisé en ce que**, dans un processus de granulation, d'instantanéisation, de revêtement ou de séchage, la valeur d'humidité mesurée est transmise à une commande de processus qui commande et/ou régule le processus en fonction de la valeur d'humidité présente.

5. Procédé selon la revendication 4, **caractérisé en ce que** la commande de processus détermine, à l'aide des valeurs d'humidité mesurées, une fin de processus ou une fin pour une étape de processus.

6. Procédé selon l'une des revendications 2 à 5, **caractérisé en ce que**, dans un processus de granulation, d'instantanéisation, de revêtement ou de séchage, la valeur mesurée pour la masse, l'étanchéité et/ou la taille de grains est transmise à une commande de processus qui commande et/ou régule le processus en fonction des valeurs présentes pour la masse, l'étanchéité et/ou la taille de grains.

7. Procédé selon l'une des revendications 1 à 6, **caractérisé en ce qu'**au moins deux modes de résonance possèdent respectivement une fréquence de résonance qui possèdent un écart entre elles d'au moins 0,5 GHz.

Fig. 1

Fig. 2

*Fig. 3*

*Fig. 4*

Fig. 5

Fig. 6

Fig. 7

Fig. 8

Fig. 9

EP 2 183 577 B1

Fig. 10

EP 2 183 577 B1

Fig. 11

EP 2 183 577 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4004119 C2
- EP 0970369 A
- DE 19645923 A1
- DE 3739538 A1
- DE 3241544 A1
- US 4257001 A
- DE 102007057092 B4

**In der Beschreibung aufgeführte Nicht-Patentliteratur**

- **LAKSHMINARAYANA et al.** Simple Microwave Technique for Independent Measurement of Sample Size and Dielectric Constant with Results for a Gunn Oscillator System. *IEEE Transactions on Microwave Theory and Technikques,* Juli 1979, vol. MTT-27 (7), 661-665
- **EBBE NYFORS ; PERTTI VAINIKAINEN.** *Industrial Microwave Sensors,* 69-108
- **KUPFER.** Microwave Moisture Measurement Systems and Their Applications. *beschreibt ein Messverfahren,* 367-370